# EUROPEAN PATENT APPLICATION

(11) **EP 4 312 362 A1**
(43) Date of publication of application: **31.01.2024**
(21) Application number: 23160845.6
(22) Date of filing: 09.03.2023
(51) Int. Cl.: H02S 20/23, H02S 30/00, F24S 30/20, F24S 30/00, F24S 25/61, F24S 25/636, F24S 25/70

(54) **MOUNTING UNIT FOR SOLAR PANELS**

(30) Priority: 10.03.2022 NL 2031243
(71) Applicant: Tinteq Holding B.V., 3704 GS Zeist (NL)
(72) Inventor: Barentsen, Matthijs Amandus, Zeist (NL); Beekmann, Jasper, Zeist (NL)
(74) Representative: IP Maison

(57) **Abstract**

Mounting unit for solar panels, comprising a profile part extending in a longitudinal direction from a first end face to a second end face, in particular with a substantially U-shaped cross section in the width direction, for mounting on an in particular inclined roof and for keeping a panel clamp in position selectable in the direction for clamping at least one solar panel, provided with at least one functional element from the group of a spacer for blocking displacement of the panel clamp at a predetermined distance from an end of the profile part in one direction, in particular being a panel end clamp, in the longitudinal direction, a cable duct or holder and/or a screw or bolt holder for clampingly holding a mounting bolt or screw, in particular in a position suitable for mounting.

## Description

The present invention relates to a mounting unit for solar panels. More particularly, the invention relates to a mounting unit for solar panels on an inclined roof, such as a steel roof with a trapezium shape or wave shape.

Solar panels are usually mounted on a roof with intervention of a mounting unit. The type of mounting unit is then matched to the type of roof, the greatest distinction being between a flat roof and an inclined roof. However, according to the prior art, among the inclined roofs, the different roof shapes and materials usually, according to the prior art, require working with different fastening units, which is the first drawback of the prior art.

In addition, the various fastening units according to the prior art have various drawbacks. Thus, the mutual alignment of the usually rectangular solar panels on an inclined roof is a cumbersome and therefore labour-intensive job, the known systems are, with regard to alignment, very sensitive to the size tolerances of the solar panels, assimilating or concealing and/or fastening the cabling is often not or hardly supported by the fastening units and working with separate parts on an inclined roof is generally an unpleasant affair since those parts slide from the roof if they are unintentionally dropped or fall. In such a case, the person charged with the mounting needs to leave the roof, search for the fallen part and then go up the roof again, which, in addition to being particularly time-consuming and therefore cost-inefficient, also involves needless actions on the roof and therefore needless risk.

The systems according to the prior art are generally characterised in that they comprise a mounting unit which is, on the one hand, adapted to be mounted on a roof and, on the other hand, to engage one or more solar panels, usually with intervention of a panel clamp. Such a panel clamp is usually a hook with which one or more solar panels are pulled against the mounting unit.

Patent publication EP2146160 describes a system for mounting solar panels on a sloped roof, wherein the position of a clamp for holding the solar panel can be determined by the amount wherein two profile parts are mutually extended. The position is adjustable but no spacer for blocking or limiting displacement of the panel clamp and/or a solar panel, in the longitudinal direction at a predetermined distance from an end of the profile part are disclosed. Patent publication US2006/156651 also describes a profile part wherein the position of a clamp is adjustable, but no spacer for blocking or limiting displacement of the panel clamp and/or a solar panel, in the longitudinal direction at a predetermined distance from an end of the profile part are disclosed. A predetermined distance in the sense of the invention is a distance that is integrally determined and/or defined by the end piece and not a setting that can be altered by a user, and a spacer in the sense of this patent application is to be seen as a blocking element.

It is therefore an object to propose a mounting unit either obviating one or more of the above-mentioned drawbacks of the prior art, or forming at least a usable alternative to this prior art.

To this end, the present invention proposes a mounting unit for solar panels, comprising a profile part extending in a longitudinal direction from a first end face to a second end face, in particular with a substantially U-shaped cross section in the width direction, for mounting on a roof, in particular an inclined roof, and for keeping a panel clamp in position selectable in the longitudinal direction for clamping at least one solar panel, provided with at least one functional element from the group of:
a spacer for blocking displacement of the panel clamp and/or a solar panel in the longitudinal direction, in particular a panel end clamp, at a predetermined distance from an end of the profile part in one direction;
a cable duct or holder; and/or
a screw or bolt holder, for clampingly holding a mounting bolt or screw, in particular in a position suitable for mounting.

Preferably, the mounting unit according to the invention comprises all said functional elements, but, depending on the functional elements present, the invention offers the following advantages compared to the prior art.

Providing a spacer for blocking displacement of the panel clamp in the longitudinal direction at a predetermined distance from an end of the profile part in one direction removes the necessity of two alignment operations when mounting solar panels on a roof. This is because, when placing solar panels with the mounting units according to the prior art, it is necessary to fasten the mounting units to the roof in mutual alignment as a first step. After that, panel clamps need to be provided, which may be placed in a variable position on the mounting unit. Because the final object is that the solar panels become fastened to the roof in mutual alignment, the panel clamps need to be aligned as well, so that this defines the position of the solar panels. The spacer of the mounting unit according to the invention obviates the necessity of this second alignment operation. When the mounting units are mounted in alignment, they directly define the positions of the panel clamps, in particular the panel end clamps. The panel clamps may be displaced (in practice often: slid) until they touch the spacer and are then located in a mutually aligned position, so that the bottom sides of the solar panels are aligned as well. In other words, the spacer acts as an end stopper or stop. A predetermined distance in the sense of the invention is a distance that is integrally determined and/or defined by the end piece and not randomly selectable by a user, and a spacer in the sense of this patent application is to be seen as a blocking element.

During mounting of solar panels, the panel clamp may (for example by movement of the panel clamp or a portion thereof in the longitudinal direction of the mounting unit) be placed against the spacer, and then be fixed with respect to and/or to the mounting unit. After this, the spacer has completed its job and it no longer serves this purpose and/or no longer only serves to position the panel clamp, but this function is at least partially and preferably completely taken over by the panel clamp fixation, which may, for example, comprise a bolt for pulling the panel clamp.

In an alternative embodiment in which the spacer rather holds a solar panel at a distance from an end of the profile part, a panel clamp may then be provided without a risk of displacing the panel.

The invention further relates to a mounting unit of a type known per se comprising a profile part provided with an optical indication for positioning and/or fixing a panel clamp at a particular distance for clamping a solar panel.

Providing a cable duct or holder has the advantage that the cabling, for example the cabling for conducting a current generated by solar panels or an earthing of solar panels and/or mounting units, may be concealed in an orderly manner, without needing to use separate parts for this. When the cable duct according to preference of the present invention is provided in a standardised position to, on, or in the mounting unit, orderly laying of cables along different mutually aligned mounting units is simplified. A mounting unit according to the present invention may comprise one or more cable ducts or holders at both ends in the longitudinal direction, which are each suitable for holding one or more cables. Thus, cables with different functionalities may be provided separately, or may even be kept at a mutual distance. For this latter purpose, cable holders at different ends of the mounting unit may be used for cables to keep them separately - for example because there is a voltage difference between them.

Providing a screw or bolt holder for the bolts with which the mounting unit may be fastened on its base (usually a roof) has the advantage that working with separate mounting bolts is not needed during the mounting of solar panels. This is particularly advantageous on an inclined roof, since dropping parts, such as bolts, at such locations usually leads to falling of those parts, which results in time loss and therefore expenses.

A screw or bolt holder according to the invention is generally preferably a holder holding the mounting bolt in an orientation suitable for mounting, so that the mounting only requires pulling/turning/screwing of the respective mounting bolt.

In one embodiment, the profile part of the mounting unit according to the invention comprises a metal part, in particular an aluminium part and more particularly an extruded aluminium part. Extruding profile parts is a manufacturing method known per se, for which the design of the invention is particularly suitable, since it is realisable with a constant cross section in the longitudinal direction.

Alternatively, the profile part may be manufactured from a plastic, more particularly a fibre-reinforced plastic. Such a plastic may be provided with electrically conductive parts or particles, which may be received in the plastic, or may be fastened therein or thereon or thereto, for example for the purpose of (connecting) an electric earthing.

In a simple embodiment according to the present invention, the at least one functional element is (integrally) provided in the profile part, for example by means of cutting, sawing, blanking or milling. In this manner, a simple and therefore robust mounting unit may be obtained.

However, in a preferred embodiment, the mounting unit according to the present embodiment comprises a separately formed endpiece, fastenable or fastened at the first and/or second end face of the profile in, to or around the profile part, the endpiece comprising the at least one functional element.

By separately forming the end piece according to the invention, the freedom is created to use a different manufacturing technique and/or a different material. This may, for example, be an (injection) moulding technique, an additive forming method such as a (3D) printing technique or a machining technique such as drilling, sawing or milling, or (only) comprise a different finishing manner such as brushing or polishing.

The endpiece may be connectable or connected to the profile part, in that they are slidably hookable or snappable to each other, or in that they are providable with corresponding or operatively overlapping or mutually aligned mounting holes, and are thus optionally mountable together on a base such as a roof using a bolt. The end piece may abut the profile part at the end face, may at least partially enclose or comprise the profile part, while it may seal or cover the end face or faces of the profile part and in particular sharp corners or edges thereof. A separately formed end part may be separately or detachably provided with the mounting unit or be connected therewith, in that they are fitted, hooked, slid or snapped or clamped into each other, or that they are, for example, undetachably interconnected by means of gluing. Both the profile part and the endpiece may, for the purpose of connection, be provided with (barbed) hooks, cams, cantilevers and/or slits and/or holes and/or recesses.

In a preferred embodiment of the present invention, the at least one endpiece comprises a part that is moulded and/or formed in a die or mould, in particular a resilient part and more particularly a plastic part. These manufacturing methods allow forming of an endpiece which does not have the same cross section over its entire length. Such a material and manufacturing choice also allows forming a resilient and/or elastically behaving part, and also allows portions of the endpiece to be simply removable, for example by breaking, cutting or shearing. Resilience and/or bendability are advantageous properties when the functional element is a cable duct or holder, because, on the one hand, damage (particularly breaking off) when providing cabling is prevented, and, on the other hand, because thus a better clamping action may be obtained, while it is also advantageous that plastic is less sharp or may simply be formed to be less sharp, so that finishing is not needed to achieve such a rounded shape that damage of cables, during mounting or afterwards due to tensile force or rubbing, is prevented. Further, if the embodiment requires it, a clamping action may be realised which is not or less simply realisable by means of extrusion. Simple bendability and/or the option of breaking off are advantageous characteristics for both the spacer and the screw or bolt holder, as will be explained in more detail in the following. The use of plastic further simply allows a portion of the mounting unit to be electrically conductive (in particular the profile piece) and a portion to be electrically insulative (in particular the endpiece and/or a cable duct or holder thereof).

In an embodiment where the end face comprises a spacer, this spacer may be formed by a blocking body, in particular be formed by a lip, cam or cantilever, for blocking the (dis)placement of a panel clamp at or within a predetermined distance from the first and/or second end face.

Panel clamps usually at least partially extend within the profile part of a mounting element. The spacer may then also extend within the profile part such that it hinders (dis)placement of at least a portion of a panel clamp. In a very simple embodiment, the spacer comprises a hole or recess for passing through a wire or cord to be stretched for the purpose of providing mounting units on a base, which recess is provided such that the wire or cord may locally hinder the (dis)placement of the panel clamp. The wire or cord then completes the blocking and thereby the spacer.

Optionally, per mounting unit, a wire, pin or other blocking may also be provided or providable in the hole or the recess.

In an advanced embodiment where the spacer comprises a lip, cam or cantilever, the blocking body may be displaceable with respect to the mounting element, in particular bendable with respect to the profile part, in order to temporarily or permanently eliminate the blocking. With an exact alignment of the mounting elements, the latter allows mounting of solar panels which deviate in size from adjacent solar panels, which are in particular larger. By being able to bend away or even cut off, shear or break the spacer in such case, the mounting unit is tolerant to dimensional deviations in the solar panels and is capable of compensating for irregularities, (small) deviations and (positioning) errors during mounting. Such a simple possibility of bending, cutting off or breaking may, for example, be realised with a plastic endpiece.

As described hereinabove, the spacer of the mounting element according to the invention may act as an end stopper or stop so that it is conceivable that the said distance is nil. Not the distance itself, but the alignment is usually the main object of the presence of the spacer.

With a mounting unit according to the present invention, the functional element may comprise a cable duct or holder, the cable duct or holder being in particular adapted for accommodating a part of a cable extending in the width direction, the width direction extending transversely to the longitudinal direction. During mounting, this is usually, just like the longitudinal direction, a direction parallel to a direction of the plane (such as that of the roof) on which the mounting unit is fastened. A height direction then extends transversely to both the longitudinal and the width direction.

Thus, a cable duct or holder may have been formed by a substantially U-shaped part, in particular a part adapted for holding cables extending in a width direction of the unit; and keeping multiple cables one above the other in the height direction. Such a U-shape may be tapering in the direction of its opening and/or comprise resilient legs forming a tapered opening in a position of rest.

Preferably, at least one of the legs of the U-shape is provided with an element which increases friction for moving a cable in the width direction. Thus, an element may, for example, be formed by one or more cantilevers extending in the height direction such as a rib with a smaller width than the cable duct or holder. In particular, such cantilevers may be provided such that a cable may only pass through it in a meandering manner, which further increases the friction.

In still a further embodiment of the present invention, the profile is provided with a V-groove, for reception of a particularly self-drilling screw, for providing an earthing, and in particular for providing an earthing before the panels are mounted.

In still a further embodiment of the present invention, where the mounting unit further comprises an endpiece, the endpiece comprises a screw or bolt holder, adapted to clampingly hold a screw or bolt in an orientation for mounting the mounting unit on a base. A main object of such a bolt holder and in particular the clamping action thereof is minimizing dropping of loose mounting gear such as screws and bolts. An additional advantage is that the screw or bolt may already have been provided in the orientation suitable for mounting, which simplifies the mounting operations. Alternatively, it is conceivable that a screw thread is provided in the mounting unit in which a bolt is fastenable or fastened in advance.

Such a screw or bolt holder comprises, for example, lips extending towards one another in the width direction transversely to the longitudinal direction of the bolt to be held, and which are preferably fastened at a larger distance than their own length from a part operatively forming the bottom side of the mounting element, preventing that they (wholly or partially) end up between the mounting element and a base (such as a roof) and/or a screw or bolt and thereby preventing erroneous mounting and/or alignment and/or leaks. The said lips may be interconnected before mounting and only be pressed apart during mounting. The mounting unit according to the invention may be provided with a pre-mounted bolt or screw for mounting of the mounting unit on a base.

The invention further relates to a mounting unit, provided with a panel clamp for clamping at least one solar panel, the panel clamp comprising a substantially form-fitting portion for cooperation with the profile part, the panel clamp in particular comprising slits for receiving cantilevers provided to the profile part and being adapted for anchoring in a position in the longitudinal direction on the profile, for example in that the panel clamp may be pulled by means of, for example, a bolt.

Such a panel clamp may be provided with cantilevers limiting the rotation of the panel clamp in the profile part, in particular provided to a part fastenable separately to or around the panel clamp and more particularly in the slits thereof, such as a clip fastenable around the panel clamp.

The profile part of a mounting element according to the invention may comprise a U-profile comprising, at its legs and in particular at the ends thereof, flanges for holding and guiding panel clamps in the longitudinal direction. The flanges may be dimensioned and/or matched to the clamps to be used such that they hinder and/or limit rotation of the panel clamp.

The profile may further comprise an engaging means, in particular formed by a slit, for placement in a (rubber) sleeve, and/or being generally adapted for mounting with intervention of such a (rubber) sleeve.

All aspects, features or measures of the invention described hereinabove (declare) may also be used in any other combination than the explicitly declared one according to the invention. The invention will hereinafter be elucidated with reference to the following figures, showing non-limitative embodiments of the invention.

Herein:
- figure 1 shows a schematic perspective view of a simple embodiment of a mounting unit according to the present invention;
- figure 2 shows a perspective view of a preferred embodiment of a mounting unit according to the present invention;
- figure 3 shows a cross section in the longitudinal direction of the mounting unit of figure 2;
- figure 4 shows a perspective detailed view of an endpiece of a mounting unit of figures 2 and 3;
- figure 5 shows a section in the height direction of a panel clamp according to the invention.

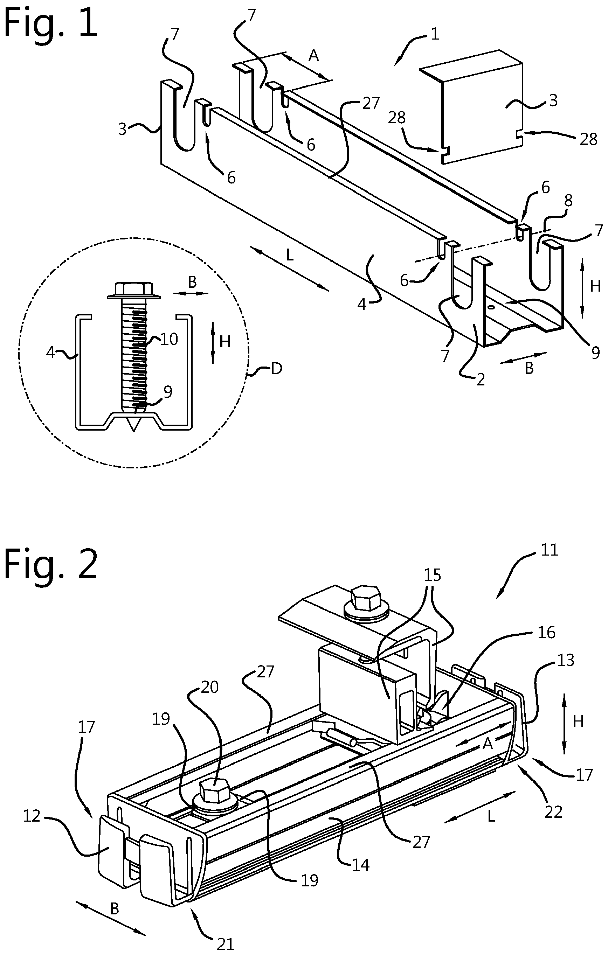

Figure 1 shows a schematic perspective view of a simple embodiment 1 of a mounting unit according to the present invention, comprising a profile part 4 extending in a longitudinal direction L from a first end face 2 to a second end face 3, in particular with a substantially U-shaped cross section D in the width direction B, for mounting on a base, in particular an (inclined) roof and for keeping a panel clamp 5 in position selectable in the direction L for clamping at least one solar panel (not shown), provided with a spacer 6 for (in combination with an alignment cord 8) blocking displacement of the panel clamp 5, in particular being a panel end clamp 5, in the longitudinal direction L, at a predetermined distance A from an end of the profile part 4 in one direction, a cable duct 7; and a screw or bolt holder 9 for clampingly holding a mounting bolt 10 in a position suitable for mounting in the example shown (shown in section D).

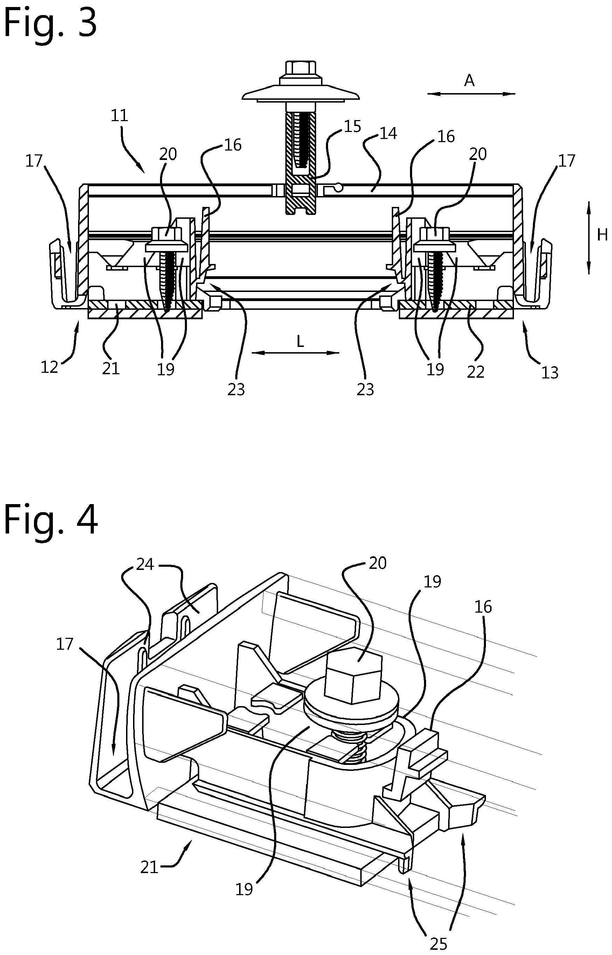

Figure 2 shows a perspective view of a preferred embodiment 11 of a mounting unit for solar panels, comprising a profile part 14 extending in a longitudinal direction L from a first end face 12 to a second end face 13, in particular with a substantially U-shaped cross section in the width direction B, for mounting on a base, in particular an (inclined) roof and for keeping a panel clamp 15 in position selectable in the direction L for clamping at least one solar panel (not shown), provided with a spacer 16 for blocking displacement of the panel clamp 15 at a predetermined distance A from an end of the profile part 14 in one direction, and a cable duct 17, and a screw or bolt holder 19 for clampingly holding a screw 20 (shown in detail in figures 3 and 4) in a position suitable for mounting (shown). In contrast to the embodiment 1 of figure 1, the functional elements in the embodiment 11 of figure 2 are received in separate endpieces 21, 22.

Figure 3 shows a section in the longitudinal direction L of the mounting unit of figure 2. It can be seen in detail that the endpieces 21, 22 each comprise a spacer 16, being a blocking body 16, formed by a cantilever, for blocking the placement of a panel clamp 15 at or within a predetermined distance A from the first and/or second end face 12, 13. The blocking body is bendable about an bending axis 23 with respect to the profile part 14, in order to temporarily or permanently eliminate the blocking. The functional elements further comprise a cable duct 17, adapted for accommodating a part of a cable extending in the width direction (not shown). The cable duct 17 is formed by a substantially U-shaped part.

Figure 4 shows a perspective detailed view of an endpiece 21 of a mounting unit 11 of figures 2 and 3. It can be seen that the legs of the U are provided with an element 24 which increases friction for moving a cable in the width direction, formed by a cantilever extending in the height direction, with a smaller width than the cable duct or holder. Hooks 25 may further be seen with which the endpiece engages the profile part 14 of the mounting unit 11.

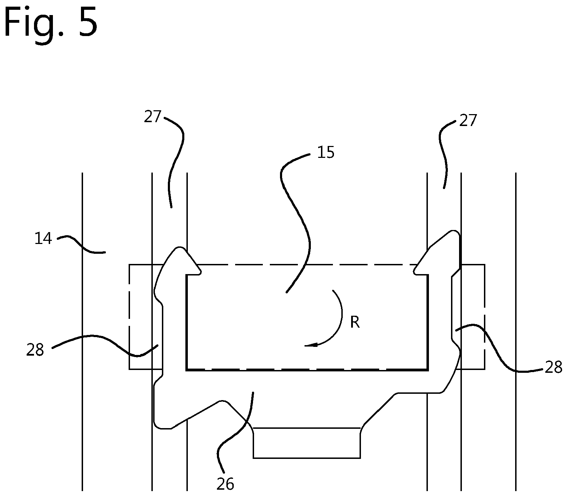

Figure 5 shows a section in the height direction of a panel clamp 15 according to the invention received in the profile part 14 of a mounting unit 11 according to the invention by means of rotation in the direction R. At the height of the recesses 28 (visible in figure 1), a clip 26 is received, preventing further turning in the direction R in that it partially form-fittingly abuts the cantilevers 27 provided to the profile part 14. This makes the panel clamps simple to mount. Such a clip may generally (so also separate from the embodiment shown) be overdimensioned, at least in the width direction, to fix the panel clamp at least somewhat clampingly in its position, in order to prevent unintended displacement during mounting.

The above-described examples only serve to illustrate and by no means serve to limit the protective scope as defined in the following claims.

In particular, a profile part is understood to mean any suitable part or formed part, such as, for example, a part formed by blanking and/or bending. Anywhere in this application, the term roof has a broad meaning and is generally a support. This may, in certain cases, also include a facade or floor. The mounting unit according to the invention may be provided with draining means such as holes, slits or openings to prevent water accumulation by precipitation or condensation.

## Claims

1. Mounting unit for solar panels, comprising:
- a profile part extending in a longitudinal direction (L) from a first end face to a second end face, in particular with a substantially U-shaped cross section in the width direction (B), for mounting on an, in particular inclined, roof, and for keeping a panel clamp in position selectable in the direction (L) for clamping at least one solar panel, provided with at least one functional element from the group of:
∘ a spacer for blocking or limiting displacement of the panel clamp and/or a solar panel, in particular being a panel end clamp, in the longitudinal direction at a predetermined distance from an end of the profile part in one direction;
∘ a cable duct or holder; and/or
∘ a screw or bolt holder, for clampingly holding a mounting bolt or screw, in particular in a position suitable for mounting.

2. Mounting unit according to claim 1, comprising a separately formed endpiece, fastenable or fastened at the first and/or second end face of the profile in, to or around the profile, wherein the endpiece comprises the at least one functional element.

3. Mounting unit according to claim 2, wherein the at least one endpiece comprises a resilient part and more particularly a resilient plastic part.

4. Mounting unit according to claim 1, 2 or 2, wherein the profile part comprises a metal part, in particular an aluminium part and more particularly an extruded aluminium part or a plastic part, more particularly a fibre-reinforced plastic part.

5. Mounting unit according to claim 4, wherein the at least one endpiece comprises a part that is cast and/or formed in a die or mould.

6. Mounting unit according to claim 4 or 5, wherein the endpiece comprises a spacer, such as a blocking body, in particular formed by a cam or cantilever, for blocking the placement of a panel clamp at or within a predetermined distance from the first and/or second end face.

7. Mounting unit according to claim 6, wherein the blocking body is displaceable, in particular bendable with respect to the profile part, in order to temporarily or permanently eliminate the blocking.

8. Mounting unit according to any one of the preceding claims, wherein the functional element comprises a cable duct or holder, wherein the cable duct or holder is adapted for accommodating a part of a cable extending in the width direction.

9. Mounting unit according to claim 8, wherein the cable duct or holder is formed by a substantially U-shaped part, in particular a part adapted for holding cables extending in a width direction of the unit; and keeping multiple cables one above the other in the height direction.

10. Mounting unit according to claim 9, wherein at least one of the legs of the U is provided with an element which increases friction for moving a cable in the width direction, and still more particularly comprises a cantilever extending in the height direction, with a smaller width than the cable duct or holder.

11. Mounting unit according to any one of the preceding claims, wherein the profile is provided with a V-groove, for reception in particular of a self-drilling screw, for providing an earthing, and in particular for providing an earthing before the panels are mounted.

12. Mounting unit comprising a screw or bolt holder, adapted to clampingly hold a screw or bolt in an orientation for mounting of the mounting unit on a base, more particularly provided with a screw or bolt.

13. Mounting unit according to claim 12, wherein the screw or bolt holder comprises lips extending towards one another in the width direction transversely to the longitudinal direction of the bolt to be held and preferably fastened at a greater distance than their own length from a part operatively forming the bottom side of the mounting element.

14. Mounting unit according to any one of the preceding claims, provided with a panel clamp for clamping at least one solar panel, wherein the panel clamp comprises a substantially form-fitting portion for cooperation with the profile part, in particular wherein the panel clamp comprises slits for receiving cantilevers provided to the profile part and is adapted for anchoring in a position in the longitudinal direction on the profile.

15. Mounting unit according to claim 14, wherein the panel clamp is provided with cantilevers limiting the rotation of the panel clamp in the profile part, in particular provided to a part fastenable separately to or around the panel clamp and more particularly in the slits thereof, such as a clip fastenable around the panel clamp.
